Europäisches Patentamt

European Patent Office

Office européen des brevets

(19)

(11) Veröffentlichungsnummer: **0 196 549**
**B1**

## (12) EUROPÄISCHE PATENTSCHRIFT

(45) Veröffentlichungstag der Patentschrift: **13.06.90**

(21) Anmeldenummer: **86103701.8**

(22) Anmeldetag: **19.03.86**

(51) Int. Cl.⁵: **H 04 L 25/04, H 04 L 5/16**

(54) **Verfahren zur Erzeugung eines Stellsignals für einen Entzerrer sowie Schaltungsanordnung zur Durchführung des Verfahrens.**

(30) Priorität: **04.04.85 DE 3512441**

(43) Veröffentlichungstag der Anmeldung:
**08.10.86 Patentblatt 86/41**

(45) Bekanntmachung des Hinweises auf die Patenterteilung:
**13.06.90 Patentblatt 90/24**

(84) Benannte Vertragsstaaten:
**BE DE FR GB IT NL SE**

(56) Entgegenhaltungen:
**DE-A-2 655 967**
**US-A-3 205 442**
**US-A-4 220 816**
**ELECTRICAL COMMUNICATION, Band 48, Nr. 1,2, 1973, Seiten 79-92, Harlow, GB; A. JESSOP et al.: "120-Megabit per second coaxial system demonstrated in the laboratory"**
**PATENT ABSTRACTS OF JAPAN, Band 9, Nr. 10 (E-290)1733r, 17. Januar 1985; & JP-A-59 161 132 (FUJITSU K.K.) 11-09-1984**

(73) Patentinhaber: **Nixdorf Computer Aktiengesellschaft**
**Fürstenallee 7**
**D-4790 Paderborn (DE)**

(72) Erfinder: **Dreker, Josef**
**Mittlerer Weinberg 19**
**D-3533 Willebadessen (DE)**
Erfinder: **Schreiber, Harald**
**Strandasterweg 7**
**D-4796 Salzkotten (DE)**

(74) Vertreter: **Schaumburg, Thoenes & Englaender**
**Mauerkircherstrasse 31 Postfach 86 07 48**
**D-8000 München 86 (DE)**

EP 0 196 549 B1

## Beschreibung

Die Erfindung betrifft ein Verfahren zur Erzeugung eines Stellsignals für einen Entzerrer für verzerrte digitale Impulssignale mit unterschiedlichen Impulsfolgegeschwindigkeiten, insbesondere für bipolare Signale, bei dem ein Impulssignal hinsichtlich seiner Amplitudenverzerrung analysiert wird und das Analysenergebnis die Bemessung der Stellgröße steuert. Ferner betrifft die Erfindung eine Schaltungsanordnung zur Durchführung des Verfahrens.

Um bei der Übertragung von digitalen Daten sicherzustellen, daß sich die in der Regel kapazitätsbehaftete Übertragungsstrecke nicht auf einen Gleichspannungswert auflädt, werden die digitalen Daten üblicherweise in einem AMI-Code bzw. in Form einer pseudoternären Impulsfolge übertragen, bei der der logische Kennzustand 0 durch die Signalspannung 0 und der logische Kennzustand 1 durch eine bei jedem nächsten 1-Bit die Polarität wechselnde Signalspannung +U bzw. -U dargestellt wird. Dabei liegt bei einer abwechselnden Abfolge von logischen 0- und 1-Zuständen in der Impulsfolge eine kleinere Signaländerungsoder Impulsfolgegeschwindigkeit vor als bei unmittelbar aufeinanderfolgenden logischen 1-Zuständen.

Aufgrund des frequenzabhängigen Übertragungsverhaltens von Übertragungsstrecken werden digitale Impulssignale mit unterschiedlichen Impulsfolgegeschwindigkeiten bei der Übertragung häufig so stark verzerrt, daß man sie am Ende des Übertragungsweges nicht mehr als solche erkennen kann. Zur Regeneration der digitalen Daten müssen die übertragenen digitalen Impulssignale zuerst entzerrt werden, bevor sie einem Impulsformer zugeführt werden. Zur automatischen Entzerrung solcher verzerrter digitaler Impulssignale verwendet man in der Regel einen adaptiven Entzerrer, der seine Entzerrungscharakteristik an das unbekannte und oft variable Übertragungsverhalten der Übertragungsstrecke selbsttätig anpaßt. Ein solcher adaptiver Entzerrer besteht im wesentlichen aus dem eigentlichen einstellbaren Entzerrer und einer Schaltungsanordnung zur Erzeugung des Stellsignals für den Entzerrer.

Eine derartige Schaltungsanordnung zur Erzeugung eines Stellsignals für einen Entzerrer für digitale Impulssignale ist bereits aus der DE-OS 29 08 588 bekannt. Sie besteht aus einem Vorverzerrungsfilter, einem Vorzeichenkoinzidenz-Autokorrelator und einem Korrekturschaltkreis zur Sicherung der Regelstabilität. Diese bekannte Schaltungsanordnung hat jedoch den Nachteil, daß sie insbesondere wegen der Verwendung eines Vorzeichenkoinzidenz-Autokorrelators sehr kompliziert aufgebaut ist, so daß sie einerseits störanfällig und andererseits teuer in der Herstellung ist.

Es ist daher Aufgabe der Erfindung, eine einfache und zuverlässige Möglichkeit zur Erzeugung eines Stellsignals für einen Entzerrer für verzerrte digitale Impulssignale mit unterschiedlichen Impulsfolgegeschwindigkeiten, insbesondere für bipolare Signale, anzugeben.

Diese Aufgabe wird ausgehend von einem Verfahren eingangs genannter Art erfindungsgemäß dadurch gelöst, daß die Stellgröße für den Entzerrer abhängig von einem Vergleich der aus den Amplituden der einzelnen Impulse am Eingang des Entzerrers abgeleiteten Regelsteuersignale mit den aus den Amplituden der entsprechenden Impulse am Ausgang des Entzerrers abgeleiteten Regelsteuersignalen derart bemessen wird, daß der Entzerrungsgrad des Entzerrers so lange ansteigt, bis der Amplitudenunterschied der Impulse am Eingang des Entzerrers und der entsprechenden Impulse am Ausgang des Entzerrers der vom Entzerrer verursachten linearen Amplitudendämpfung entspricht.

Bei der Übertragung digitaler Impulssignale mit unterschiedlichen Impulsfolgegeschwindigkeiten, insbesondere bipolarer Signale, über eine Übertragungsstrecke mit frequenzabhängigem Übertragungsverhalten werden die einzelnen Impulse der digitalen Signale unterschiedlich stark gedämpft, was auf die unterschiedlichen Impulsfolge- oder Signaländerungsgeschwindigkeiten zurückzuführen ist.

Das erfindungsgemäße Verfahren zur Erzeugung eines Stellsignals ist insbesondere für einen Entzerrer für bipolare Impulssignale gut geeignet. Wie bereits vorstehend beschrieben, treten bei bipolaren Impulssignalen Signalsprünge mit stark unterschiedlichen Amplituden auf. So enthalten symmetrische bipolare Impulssignale einerseits Signalsprünge mit der Amplitude U und andererseits Signalsprünge mit der Amplitude 2U. Diese stark unterschiedlichen Signalsprünge vollziehen sich mit einer stark unterschiedlichen Impulsfolge- oder Signaländerungsgeschwindigkeit. Dies hat zur Folge, daß bipolare Impulssignale bei der Übertragung über eine Übertragungsstrecke mit frequenzabhängiger Übertragungscharakteristik besonders stark amplitudenverzerrt werden, so daß sich die Amplituden der einzelnen Impulse am Ende des Übertragungsweges besonders stark unterscheiden. Diese stark unterschiedlichen Impulsamplituden können aber in einfacher Weise diskriminiert und für die Bemessung der Stellgröße für den Entzerrer ausgewertet werden.

In einer vorteilhaften Weiterbildung der Erfindung erfolgt der Vergleich der Amplituden der einzelnen Impulse in einfacher Weise durch Differenzbildung ihrer Beträge.

Bei der dritten Alternative der Erfindung erfolgt der Vergleich der Amplituden der einzelnen verzerrten Impulse mit den Amplituden der entsprechenden Impulse am Ausgang des Entzerrers zweckmäßig durch Feststellung der Gleichzeitigkeit des Überschreitens eines Soll-Wertes, der zwischen den größten und den kleinsten Impulsamplituden liegt. Bei positivem Feststellungsergebnis wird die dem Entzerrer zuzuführende Stellgröße im Sinne einer Erhöhung des Entzerrungsgrades bemessen. Diese Ausbildung der Erfindung beruht auf der Erkenntnis, daß die dem Entzerrer zuzuführende Stellgröße so lange im Sinne einer Erhöhung des Entzerrungsgrades bemessen werden muß, bis die Impulse, die am Eingang des Entzerrers einen zwischen den größten und den kleinsten Impulsamplituden liegenden Soll-Wert überschreiten, nicht mehr gleichzeitig am Ausgang des Entzerrers einen ebenfalls zwischen den größten und kleinsten Impulsamplituden liegenden Soll-Wert überschreiten, da dann die durch die Entzerrung bedingte Amplitudendämpfung der größten Impulsamplituden ausreichend ist.

Da der Entzerrer üblicherweise eine gewisse lineare Amplitudendämpfung verursacht, ist es vorteilhaft, wenn die Soll-Werte unabhängig voneinander so eingestellt werden können, daß die Impulse mit den größten Amplituden den jeweils eingestellten Soll-Wert gerade überschreiten.

In einer Weiterbildung der dritten Alternative der Erfindung werden die verzerrten Impulse und die Impulse am Ausgang des Entzerrers jeweils derart linear verstärkt, daß ihre größten Amplituden den jeweils fest eingestellten Soll-Wert gerade überschreiten. Dies hat den Vorteil, daß die Soll-Werte nicht beispielsweise manuell so justiert zu werden brauchen, daß sie zwischen den größten und kleinsten Impulsamplituden liegen.

Vorteilhaft stimmt dabei der Soll-Wert für die verzerrten Impulssignale mit dem Soll-Wert für die Impulssignale am Ausgang des Entzerrers überein.

In einer vorteilhaften Weiterbildung der Erfindung wird mit dem Vergleichsergebnis ein integraler Regelvorgang gesteuert, durch den das Stellsignal für den Entzerrer erzeugt wird, da dadurch eine bleibende Regelabweichung hinsichtlich des Ist-Entzerrungsgrades vom Soll-Entzerrungsgrad des Entzerrers vermieden wird.

Eine Schaltungsanordnung zur Durchführung des vorstehend beschriebenen Verfahrens gemäß der dritten Alternative der Erfindung, mit einer Analyseeinrichtung zur Analyse des Impulssignals hinsichtlich seiner Amplitudenverzerrung und mit einer Bemessungseinrichtung für das dem Entzerrer zuzuführende Stellsignal ist in weiterer Ausbildung des Erfindungsgedankens so aufgebaut, daß die Analyseeinrichtung einen ersten Pegelregler am Eingang des Entzerrers und einen zweiten Pegelregler am Ausgang des Entzerrers umfaßt, deren Reglersteuersignal jeweils bei Überschreiten eines Norm-Spannungspegels durch Impulse am Eingang des Entzerrers bzw. durch Impulse am Ausgang des Entzerrers verändert wird, und daß die Bemessungseinrichtung eine Vergleichsschaltung für die Reglersteuersignale des ersten und zweiten Pegelreglers und einen dieser nachgeschalteten Regler enthält, dessen Ausgang mit dem Stelleingang des Entzerrers verbunden ist. Mit Hilfe des ersten Pegelreglers werden dabei die verzerrten Impulse am Eingang des Entzerrers so lange linear verstärkt, bis ihre größten Amplituden einen ersten Norm-Spannungspegel überschreiten, wodurch das Reglersteuersignal des ersten Pegelreglers derart verändert wird, daß die Verstärkung des ersten Pegelreglers verringert wird. Wenn die Verstärkung des ersten Pegelreglers dann einen Wert erreicht hat, bei dem auch die Impulse mit den größten Amplituden den ersten Norm-Spannungspegel nicht mehr erreichen, wird das Reglersteuersignal wieder im Sinne einer Erhöhung der Verstärkung verändert. Derselbe Vorgang findet beim zweiten Pegelregler statt. Auch hier wird durch wechselweises Verändern des Reglersteuersignals für den zweiten Pegelregler erreicht, daß dessen mittlere Verstärkung so eingestellt wird, daß die Impulse mit den größten Amplituden einen zweiten Norm-Spannungspegel gerade überschreiten. Vorzugsweise stimmen dabei der erste und der zweite Norm-Spannungspegel überein. In der Vergleichsschaltung für die Reglersteuersignale des ersten und des zweiten Pegelreglers wird durch Vergleich der beiden Reglersteuersignale z.B. festgestellt, ob die höchsten Impulse, die am Eingang des Entzerrers den ersten Norm-Spannungspegel überschreiten, identisch sind mit den höchsten Impulsen, die am Ausgang des Entzerrers den zweiten Norm-Spannungspegel überschreiten. Ist dies der Fall, so wird der Regler, dessen Ausgang mit dem Stelleingang des Entzerrers verbunden ist, durch die Vergleichsschaltung so gesteuert, daß der Entzerrungsgrad des Entzerrers erhöht wird.

Eine einfache Ausführung der Vergleichsschaltung stellt ein konjunktives Verknüpfungsglied dar, mit dem die Koinzidenz der Reglersteuersignale des ersten und zweiten Pegelreglers festgestellt werden kann.

Der mit dem Stelleingang des Entzerrers verbundene Regler ist vorzugsweise ein integraler Regler, da dadurch eine bleibende Regelabweichung zwischen einem Soll-Entzerrungsgrad und dem Ist-Entzerrungsgrad des Entzerrers vermieden werden kann. Es kann aber auch jeder andere Reglertyp verwendet werden.

Eine einfache Ausführungsform des integralen Reglers enthält mindestens einen Kondensator, der mit seinem einen Anschluß auf Massepotential liegt und an seinem anderen Anschluß mit einem ersten Ladepotential und über einen durch die Vergleichsschaltung steuerbaren Schalter mit einem zweiten Ladepotential verbunden ist. Die Extremwerte der Ausgangsspannung des integralen Reglers werden dabei durch die beiden voneinander verschiedenen Ladepotentiale vorgegeben, durch die der Entzerrungsgrad des Entzerrers maximal bzw. minimal eingestellt werden kann.

Um das Reglersteuersignal für den ersten Pegelregler zu erhalten, enthält dieser zum Vergleich seines Ausgangssignals mit dem Norm-Spannungspegel vorteilhaft einen Komparator, der in Abhängigkeit vom Vergleichsergebnis jeweils ein definiertes Ausgangssignal abgibt.

In einer weiteren Ausbildung der Erfindung enthält der erste Pegelregler einen linearen Verstärker mit fest eingestelltem Verstärkungsfaktor, einen einstellbaren Spannungsteiler als Stellglied und eine integrale Regelschaltung, deren Ausgang mit dem Stelleingang des Stellgliedes verbunden ist. Während der leicht herzustellende lineare Verstärker mit fest eingestelltem Verstärkungsfaktor als verstärkendes Element dient, kann die Amplitude eines am Eingang des Pegelreglers anliegenden Impulssignals mit Hilfe des einstellbaren Spannungsteilers stufenlos verringert werden. Die Einstellung des Spannungsteilers wird dabei zur Vermeidung einer bleibenden Regelabweichung durch die integrale Regelschaltung vorgenommen.

Vorteilhaft enthält dabei der Spannungsteiler des ersten Pegelreglers einen Feldeffekttransistor als regelbaren Widerstand, dessen Steuerelektrode mit dem Ausgang der integralen Regelschaltung verbunden ist, da ein Feldeffekttransistor beispielsweise gegenüber einem Potentiometer in einfacherer Weise regelbar ist.

Eine einfache Ausführung der integralen Regelschaltung enthält mindestens einen Kondensator, der mit seinem einen Anschluß auf Massepotential liegt und an seinem anderen Anschluß über einen Ladewiderstand mit einem Ladepotential und über einen durch den Komparator steuerbaren Schalter über einen Entladewiderstand mit Massepotential verbunden ist. Das Ausgangssignal der integralen Regelschaltung ist dabei in einfacher Weise dadurch veränderbar, daß der andere Anschluß des Kondensators mittels des durch den Komparator steuerbaren Schalters über den Entladewiderstand auf Massepotential legbar ist. Es ist dadurch möglich den Kondensator mit einer bestimmten Zeitkonstante zu entladen, wodurch das positive Ausgangssignal der integralen Regelschaltung kleiner wird.

Um das Komparatorausgangssignal, das als Reglersteuersignal für den ersten Pegelregler dient, im Sendebetrieb einer die erfindungsgemäße Schaltungsanordnung enthaltenden Sende- und Empfangsstation abschalten zu können, ist zwischen dem Komparatorausgang und dem Schalter ein konjunktives Verknüpfungsglied vorgesehen.

Vorteilhaft ist der Ladewiderstand des Kondensators der integralen Regelschaltung groß gegenüber ihrem Entladewiderstand, da dadurch gewährleistet ist, daß sich der Kondensator beispielsweise während des Sendebetriebs, wenn die Schaltungsanordnung außer Betrieb gesetzt ist, nur unwesentlich aufladen kann. Daraus ergibt sich der Vorteil, daß die Einstellung des ersten Pegelreglers während dieses inaktiven Zeitraumes nahezu unverändert erhalten bleibt.

In einer weiteren vorteilhaften Ausführung der Erfindung ist der zweite Pegelregler mit dem ersten Pegelregler baugleich.

Die Erfindung wird im folgenden an Hand eines Anwendungsbeispiels und eines Ausführungsbeispiels näher erläutert. Es zeigen:

Fig. 1 ein Anwendungsbeispiel eines die erfindungsgemäße Schaltungsanordnung enthaltenden adaptiven Entzerrers,

Fig. 2 ein Ausführungsbeispiel der erfindungsgemäßen Schaltungsanordnung zur Erzeugung eines Entzerrer-Stellsignals zusammen mit einem Entzerrer und

Fig. 3 den Signalverlauf an einigen Stellen der Schaltungsanordnung von Fig. 2.

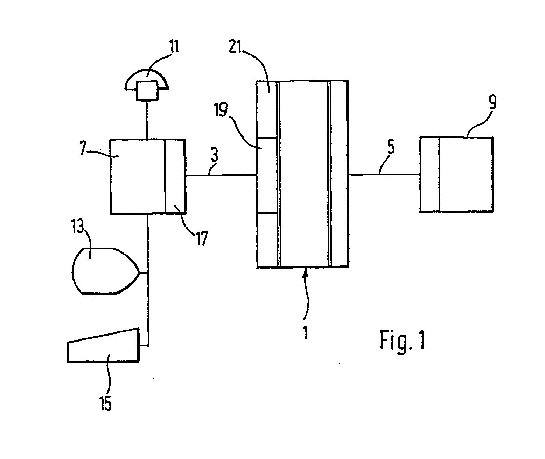

In Fig. 1 ist ein Anwendungsbeispiel eines die erfindungsgemäße Schaltungsanordnung enthaltenden adaptiven Entzerrers zur automatischen Entzerrung von leitungsverzerrten digitalen Impulssignalen gezeigt. Es ist eine insgesamt mit 1 bezeichnete digitale Fernsprech- und Datenvermittlungsanlage dargestellt, an die über Zweidrahtleitungen 3 und 5 Teilnehmerendgeräte 7 und 9 angeschlossen sind, an denen wiederum eine Fernsprechstelle 11 und ein Datenterminal mit Datensichtgerät 13 und Tastatur 15 betrieben werden können. Die Zweidrahtleitungen 3 bzw. 5 können unterschiedliche Längen, Querschnitte und Kapazitätsbelegung haben. Dies hat zur Folge, daß sich die Zweidrahtleitungen 3 und 5 hinsichtlich ihres ohmschen Widerstandes und ihrer Querkapazität und somit ihres Tiefpaßverhaltens unterscheiden können. Die durch das Tiefpaßverhalten der Übertragungsleitungen 3 und 5 bedingten Verzerrungen der übertragenen digitalen Impulssignale werden bei einer Datenübertragung von der digitalen Fernsprech und Datenvermittlungsanlage zum Teilnehmerendgerät 7 durch einen adaptiven Entzerrer 17 entzerrt, der zur Erzeugung seines Entzerrer-Stellsignals die erfindungsgemäße Schaltungsanordnung enthält. Bei einer Datenübertragung vom Teilnehmerendgerät 7 zur digitalen Fernsprech- und Datenvermittlungsanlage 1 übernimmt diese Aufgabe ein weiterer analog dem adaptiven Entzerrer 17 aufgebauter Entzerrer 19. Letzterer ist Bestandteil einer digitalen Teilnehmerschaltung 21, welche zwischen der Übertragungsleitung 3 und der eigentlichen Fernsprech- und Datenvermittlungsanlage 1 angeordnet ist. Zwischen einem Teilnehmerendgerät, beispielsweise 7, und der digitalen Fernsprech- und Datenvermittlungsanlage 1 werden über die Übertragungsleitung 3 digitale Sprach- und Datenströme mit einer Datenrate von 512 Kilo-Bit pro Sekunde übertragen. Die Datenübertragung erfolgt dabei in Form von Datenblöcken von 20 Bit Länge abwechselnd vom und zum Teilnehmerendgerät.

Die erfindungsgemäße Schaltungsanordnung zur Erzeugung eines Entzerrer-Stellsignals kann darüber hinaus auch in einem adaptiven Entzerrer verwendet werden, der zur Entzerrung von verzerrten digitalen Impulssignalen eingesetzt wird, deren Verzerrungen auf das Hochpaßverhalten einer Übertragungsstrecke zurückzuführen sind.

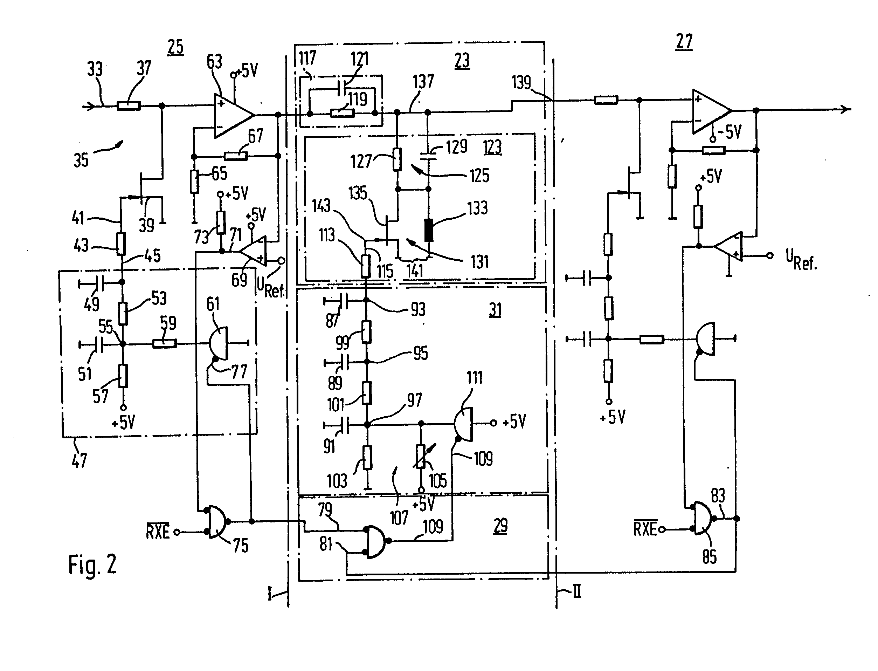

Fig. 2 zeigt eine adaptive Entzerrerschaltung, die einen einstellbaren Entzerrer 23 und eine Schaltungsanordnung zur Erzeugung des Stellsignals für den Entzerrer umfaßt. Diese Schaltungsanordnung besteht im wesentlichen aus einem ersten Pegelregler 25 (links von der Linie I), einem zweiten Pegelregler 27 (rechts von der Linie II), einer Vergleichsschaltung 29 und einem dieser nachgeschalteten integralen Regler 31. Am Eingang 33 des ersten Pegelreglers 25 ist ein einstellbarer Spannungsteiler 35 vorgesehen, der aus einem Eingangswiderstand 37 und einem als regelbaren Widerstand betriebenen Feldeffekttransistor 39 besteht. Die Steuerelektrode 41 dieses Feldeffekttransistors 39 ist über einen Widerstand 43 mit dem Ausgang 45 einer integralen Regelschaltung 47 verbunden. Diese enthält zwei Kondensatoren 49 und 51, deren einer Anschluß jeweils an Masse liegt und deren andere Anschlüsse über einen Widerstand 53 miteinander verbunden sind. Der andere Anschluß 55 des Kondensators 51 ist über einen Ladewiderstand 57 an die positive Versorgungsspannung +5V angeschlossen und über einen Entladewiderstand 59 mit einem Schalter 61 verbunden, der in seiner geschlossenen Stellung den Anschluß 55 des Kondensators 51 über den Widerstand 59 auf Massepotential legt.

Dem Spannungsteiler 35 nachgeschaltet ist ein rückgekoppelter Operationsverstärker 63 mit über die Rückkopplungswiderstände 65 und 67 fest eingestelltem Verstärkungsfaktor. Der Ausgang des Operationsverstärkers 63, der gleichzeitig den Ausgang des ersten Pegelreglers 25 bildet, ist mit einem Eingang eines Komparators 69 verbunden. An den anderen Eingang des Komparators 69 ist eine Referenzspannung $U_{Ref}$ angelegt. Der Aus-gang 71 des Komparators 69 ist einerseits über einen Widerstand 73 mit der positiven Versorgungsspannung +5V und andererseits direkt mit einem der beiden Eingänge eines konjunktiven Verknüpfungsgliedes 75 verbunden.

Der andere Eingang dieses konjunktiven Verknüpfungsgliedes 75 ist mit einem Empfangsbe-triebssignal $\overline{RXE}$ beaufschlagbar. Der Ausgang dieses konjunktiven Verknüpfungsgliedes 75 ist einerseits mit dem Steuereingang 77 des Schalters 61 und andererseits mit einem ersten Eingang 79 der als konjunktives Verknüpfungsglied ausgeführten Vergleichsschaltung 29 verbunden. Der zweite Eingang 81 der Vergleichsschaltung 29 ist mit dem Ausgang 83 eines konjunktiven Verknüpfungsgliedes 85 des zweiten Pegelreglers 27 verbunden.

Auf den Aufbau des zweiten Pegelreglers 27 braucht nicht näher eingegangen zu werden, da dieser mit dem ersten Pegelregler 25 baugleich ist.

Der zwischen der Vergleichsschaltung 29 und dem einstellbaren Entzerrer 23 angeordnete integrale Regler 31 enthält drei Kondensatoren 87, 89 und 91, die jeweils mit deren einem Anschluß an Masse liegen. Ihre anderen Anschlüsse 93, 95 und 97 sind über Widerstände 99 und 101 miteinander verbunden. Der Anschluß 97 des Kondensators 91 ist über einen Widerstand 103 an Massepotential und über einen einstellbaren Widerstand 105 an die Versorgungsspannung +5V angeschlossen. Die beiden Widerstände 103 und 105 stellen einen einstellbaren Spannungsteiler 107 dar, mit dem an den Anschluß 97 des Kondensators 91 ein Potential angelegt werden kann, das zwischen dem Massepotential und der positiven Versorgungsspannung liegt. Dadurch kann der Regelbereich des integralen Reglers 31 eingestellt werden. Der Anschluß 97 des Kondensators 91 kann durch den durch die Vergleichsschaltung 29 überseinen Steuereingang 109 steuerbaren Schalter 111 direkt an die Versorgungsspannung +5V gelegt werdden. Der Ausgang des integralen Reglers 31 ist über einen Eingangswiderstand 113 mit dem Stelleingang 115 des einstellbaren Entzerrers 23 verbunden.

Der im Ausführungsbeispiel dargestellte einstellbare Entzerrer 23 besteht im wesentlichen aus einem fest eingestellten Hochpaß 117, der lediglich aus einer Parallelschaltung eines Widerstandes 119 mit einem Kondensator 121 aufgebaut ist, und einem regelbaren Hochpaß 123. Dieser enthält als für die Entzerrung wesentliche Glieder eine erste Parallelschaltung 125 eines ohmschen Widerstandes 127 mit einem Kondensator 129, die mit einer Parallelschaltung 131 einer Induktivität 133 mit einem Feldeffekttransistor 135 als regelbaren ohmschen Widerstand in Reihe geschaltet ist. Der freie Anschluß 137 der ersten Parallelschaltung 125 ist dabei mit dem Ausgang 139 des einstellbaren Entzerrers 23 verbunden, während der freie Anschluß 141 der zweiten Parallelschaltung 131 auf Massepotential liegt. Die Steuerelektrode 143 des Feldeffekttransistors 135 stellt den Stellanschluß des einstellbaren Entzerrers 23 dar und ist über den Eingangswiderstand 113 mit dem Ausgang des integralen Reglers 31 verbunden.

Obwohl vorstehend eine spezielle Ausführungsform eines einstellbaren oder regelbaren Entzerrers beschrieben wurde, ist es für die Funk-tionsweise der erfindungsgemäßen Schaltungs-anordnung zur Erzeugung eines Stellsignals für einen Entzerrer ohne Bedeutung, welcher einstellbare Entzerrertyp verwendet wird.

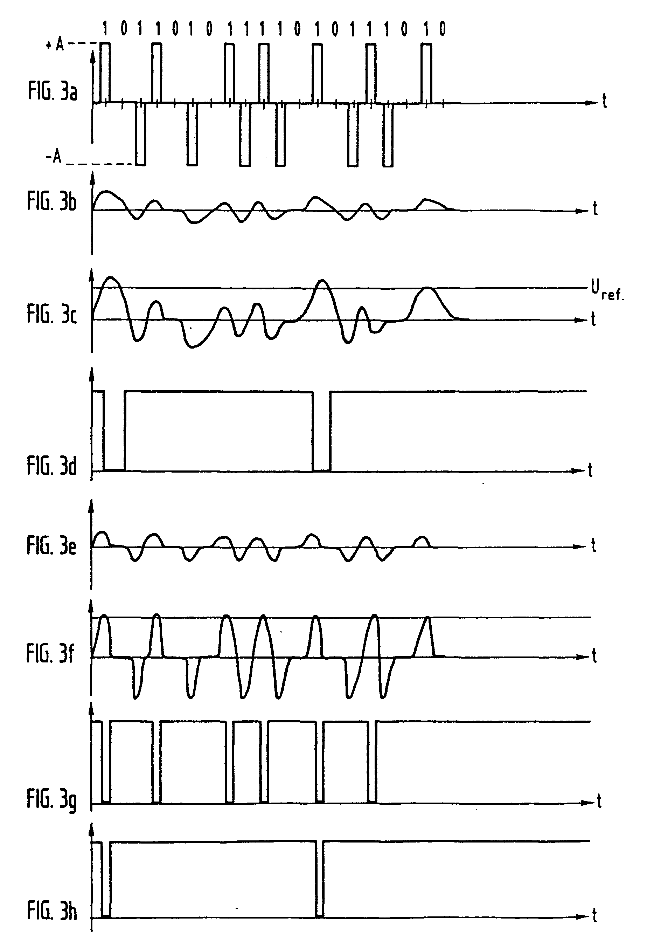

Nachdem vorstehend der Aufbau der in Fig. 2 dargestellten Schaltungsanordnung zur Erzeugung eines Entzerrer-Stellsignals zusammen mit einem Entzerrer beschrieben wurde, wird im fol-genden die Funktion dieser Schaltungsanord-nung an Hand von Fig. 2 in Verbindung mit Fig. 3 näher erläutert.

Um bei der Übertragung von digitalen Impulssignalen sicherzustellen, daß sich die Übertragungsleitung, die kapazitätsbehaftet ist, nicht auf einen Gleichspannungswert auflädt, werden die Bits, die einer logischen 1 entsprechen, als Impulse dargestellt, deren Polarität ständig wechselt. In Fig. 3a ist ein Datenblock von 20-Bit Länge dargestellt, bei dem die Polarität der logischen 1-Impulse ständig wechselt. Wird die Signalfolge gemäß Fig. 3a auf einer normalen Zweidrahtleitung übertragen, so erhält man an deren Ende infolge Dämpfung und Verzerrung das in Fig. 3b dargestellte Signal.

Aufgrund des Tiefpaßverhaltens der Übertragungsleitung hat ein 1-Impuls, der einem logischen Kennzustand 0 folgt, eine höhere Amplitude als ein I-Impuls, der einem logischen Kennzustand 1 folgt. Dies ist darauf zurückzuführen, daß bei einem Impulssprung von 0 auf z.B. +/-A eine geringere Dämpfung auftritt als bei einem Impulssprung von -A auf +A oder umgekehrt, da im letzteren Falle eine größere Signaländerungsgeschwindigkeit vorliegt. Dieser Sachverhalt ist auch aus Fig. 3b zu entnehmen. Bei der Schaltungsanordnung gemäß Fig. 2 wird diese Amplitudendifferenz der einzelnen Impulse als Maß für die Verzerrung auf der Leitung verwendet. Da die übertragenen Signale, wie vorstehend beschrieben, im wesentlichen erdsymmetrisch sind, werden nur die positiven Halbwellen ausgewertet.

Gelangt eine Signalfolge gemäß Fig. 3b an den Eingang 33 der in Fig. 2 dargestellten Schaltungsanordnung, so wird sie zunächst mit Hilfe des ersten Pegelreglers 25 auf einen normierten Wert verstärkt. Diese in Fig. 3c dargestellte Ausgangssignalfolge des ersten Pegelreglers 25 wird im Komparator 69 mit der Referenzspannung $U_{Ref.}$ verglichen (siehe dazu auch Fig. 3c). Dabei überschreiten die vorstehend erwähnten höheren Impulse den durch $U_{Ref.}$ definierten Norm-Signalpegel. Am Ausgang 71 des Komparators 69 entstehen dann Reglersteuerimpulse (siehe Fig. 3d). Diese werden mittels des konjunktiven Verknüpfungsgliedes 75 mit dem Empfangsbetriebssignal $\overline{RXE}$ UND-verknüpft.

Das Empfangsbetriebssignal $\overline{RXE}$ weist immer dann 0 Volt-Potential auf, wenn die Schaltungsanordnung auf Empfangsbetrieb geschaltet ist. Dies hat zur Folge, daß die vom Komparator 69 erzeugten Reglersteuerimpulse nur im Empfangsbetrieb durchgeschaltet werden. Die Ausgangsimpulse des konjunktiven Verknüpfungsgliedes 75 werden dem Steuereingang 77 des Schalters 61 zugeführt. Dieser schaltet das 0 Volt-Potential an seinem Eingang für die Dauer der Reglersteuerimpulse (siehe Fig. 3d) auf den Integrator der Regelschaltung 47. Die dort aufintegrierte Spannung dient als Steuerspannung für den Feldeffekttransistor 39, der als über die Steuerspannung veränderlicher Widerstand betrieben wird. Er bildet zusammen mit dem Eingangswiderstand 37 den regelbaren Spannungsteiler 35.

Der Ladewiderstand 57 der integralen Regelschaltung 47 ist groß gegenüber dem Entladewiderstand 59, so daß sich die Kondensatoren 49 und 51 in den Empfangspausen ($\overline{RXE}$ = logisch 1), also während eines Sendeblockes, nur unwesentlich aufladen können. Die Reglereinstellung bleibt somit bis zum nächsten Empfangsblock nahezu unverändert erhalten.

Die Ausgangssignalfolge (siehe Fig. 3c) des ersten Pegelreglers 25 wird nun dem einstellbaren oder regelbaren Entzerrer 23 zugeführt, welcher, wie im folgenden noch näher erläutert werden wird, so eingestellt wird, daß alle Impulse die gleiche Amplitude haben (siehe Fig. 3e).

Da die Signalfolge im einstellbaren Entzerrer 23 hinsichtlich ihrer Amplitude gedämpft wird, muß sie in dem zweiten Pegelregler 27 wieder auf einen normierten Wert verstärkt werden. Die Funktionsweise des zweiten Pegelreglers 27 braucht nicht näher erläutert zu werden, da sie mit der des ersten Pegelreglers 25 übereinstimmt.

Der zweite Pegelregler 27 erzeugt in der beim ersten Pegelregler 25 beschriebenen Weise Reglersteuerimpulse (siehe Fig. 3g). Im Unterschied zu den Reglersteuerimpulsdes ersten Pegelreglers 25 können die Regelsteuerimpulse des zweiten Pegelreglers 27 nicht nur bei den langsamen Impulsfolgegeschwindigkeiten, also von 0 auf 1 oder von 1 auf 0, sondern im ideal entzerrten Zustand bei allen Impulsen eines Datenblockes auftreten.

Wenn gleichzeitig ein Reglersteuerimpuls des ersten Pegelreglers 25 und ein Reglersteuerimpuls des zweiten Pegelreglers 27 vorliegen, muß der einstellbare Entzerrer 23 die Entzerrung so lange erhöhen, bis der zweite Pegelregler 27 keine Reglersteuerimpulse mehr zu dem Zeitpunkt abgibt, zu dem der erste Pegelregler 25 Reglersteuerimpulse erzeugt. Die Reglersteuerimpulse für den einstellbaren Entzerrer 23 werden daher aus den Reglersteuerimpulsen (siehe Fig. 3d und Fig. 3g) der beiden Pegelregler 25 und 27 durch die als konjunktives Verknüpfungsglied ausgeführte Vergleichsschaltung 29 gewonnen. Reglersteuerimpulse für den integralen Regler 31 werden also immer bei Koinzidenz der Reglersteuerimpulse des ersten Pegelreglers 25 mit denen des zweiten Pegelreglers 27 erzeugt, da eine stärkere Entzerrung immer dann erforderlich ist, wenn die höheren Impulse des unentzerrten normierten Signals und die höheren Impulse des entzerrten normierten Signals gleichzeitig einen vorbestimmten Soll-Wert erreichen. Durch Aufintegrieren dieser Reglersteuerimpulse wird die an der Steuerelektrode 143 des Feldeffekttransistors 135 anliegende Stellgröße für den einstellbaren Entzerrer 23 erzeugt. Die Zeitkonstante des integralen Reglers 31 ist groß gegenüber den Zeitkonstanten der integralen Regelschaltungen der beiden Pegelregler 25 und 27. Dies ist erforderlich, weil der integrale Regler 31 im eingeregelten Zustand der beiden Pegelregler 25 und 27 und somit des einstellbaren Entzerrers 23 keine Reglersteuerimpulse erhält und der "ideale" Einstellwert aber möglichst lange erhalten werden soll. Die Entzerrung des einstellbaren Entzerrers 23 wird dadurch verändert, daß die Induktivität 133 über den parallel geschalteten Feldeffekttransistor 135 mehr oder weniger wirksam geschaltet wird. Hat der Feldeffekttransistor 135 im Extremfall einen unendlich hohen ohmschen Widerstand, dann ist die Induktivität 133 voll wirksam. Hat dagegen der Feldeffekttransistor 135 einen sehr kleinen ohmschen Widerstand, dann wird die Induktivität 133 nahezu außer Kraft gesetzt.

Im Startzustand der gesamten Schaltungsanordnung sind die Kondensatoren der Pegelregler 25 und 27 auf positives Potential aufgeladen, so daß ihre Feldeffekttransistoren sperrend geschaltet sind. Die Ausgangssignale (siehe Fig. 3c und 3f) der Pegelregler 25 und 27 nehmen einen Maximalwert an. Gleichzeitig sind die Kondensatoren des integralen Reglers 31 auf ein Potential aufgeladen, das durch den Spannungsteiler 107 definiert ist und das zur Arbeitspunkteinstellung des Feldeffekttransistors 135 dient. Dieser ist voll leitend und schließt somit die Induktivität 133 kurz. Der einstellbare Entzerrer 23 stellt in dieser Einstellung ein ohmsches Dämpfungsglied dar. Durch diese Einstellung der beiden Pegelregler 25 und 27 und des einstellbaren Entzerrers 23 wird erreicht, daß die ersten Reglersteuerimpulse nach Anlegen einer Eingangsimpulsfolge eine große Impulsbreite haben, so daß sich die Regler schnell einstellen können.

Der in Fig. 2 gezeigten Schaltung kann ein nicht dargestellter, an sich bekannter Impulsformer, beispielsweise ein Komparator, nachgeschaltet werden, an dessen Ausgang dann die regenerierte Signalfolge auftritt, die der in Fig. 3a gezeigten Impulsfolge entspricht.

**Patentansprüche**

1. Verfahren zur Erzeugung eines Stellsignals für einen Entzerrer für verzerrte digitale Impulssignale mit unterschiedlichen Impulsfolgegeschwindigkeiten, insbesondere für bipolare Signale, bei dem ein Impulssignal hinsichtlich seiner Amplitudenverzerrung analysiert wird und das Analysenergebnis die Bemessung der Stellgröße steuert, dadurch gekennzeichnet, daß die Stellgröße für den Entzerrer (23) abhängig von einem Vergleich der aus den Amplituden der einzelnen Impulse am Eingang des Entzerrers (23) abgeleiteten Regelsteuersignale mit den aus den Amplituden der entsprechenden Impulse am Ausgang (139) des Entzerrers (23) abgeleiteten Regelsteuersignalen derart bemessen wird, daß der Entzerrungsgrad des Entzerrers (23) so lange ansteigt, bis der Amplitudenunterschied der Impulse am Eingang des Entzerrers (23) und der entsprechenden Impulse am Ausgang (139) des Entzerrers (23) der vom Entzerrer (23) verursachten linearen Amplitudendämpfung entspricht.

2. Verfahren nach Anspuch 1, dadurch gekennzeichnet, daß der Vergleich der Amplituden der einzelnen Impulse durch Differenzbildung ihrer Beträge erfolgt.

3. Verfahren nach Anspruch 1, dadurch gekennzeichnet, daß zum Vergleich der Amplituden der einzelnen Impulse am Eingang des Entzerrers (23) mit den Amplituden der entsprechenden Impulse am Ausgang (139) des Entzerrers (23) festgestellt wird, ob einander entsprechende Impulse jeweils einen Sollwert ($U_{Ref.}$) überschreiten, der zwischen den größten und kleinsten Amplituden der Impulse am Eingang bzw. am Ausgang (139) des Entzerrers (23) liegt, und daß die dem Entzerrer (23) zuzuführende Stellgröße im Sinne einer Erhöhung des Entzerrungsgrades bemessen wird, wenn einander entsprechende Impulse sowohl am Eingang des Entzerrers (23) als auch am Ausgang des Entzerrers (23) den jeweiligen Sollwert ($U_{Ref.}$) überschreiten.

4. Verfahren nach Anspruch 3, dadurch gekennzeichnet, daß die Sollwerte ($U_{Ref.}$) unabhängig voneinander eingestellt werden.

5. Verfahren nach Anspruch 3, dadurch gekennzeichnet, daß die Impulse am Eingang des Entzerrers (23) und die Impulse am Ausgang (139) des Entzerrers (23) jeweils derart linear verstärkt werden, daß ihre größten Amplituden den jeweils fest eingestellten Sollwert ($U_{Ref.}$) gerade überschreiten.

6. Verfahren nach Anspruch 5, dadurch gekennzeichnet, daß der Sollwert ($U_{Ref.}$) für die Impulse am Eingang des Entzerrers (23) mit dem Sollwert ($U_{Ref.}$) für die Impulse am Ausgang (139) des Entzerrers (23) übereinstimmt.

7. Verfahren nach einem der vorhergehenden Ansprüche, dadurch gekennzeichnet, daß mit dem Vergleichsergebnis ein integraler Regelvorgang gesteuert wird, durch den das Stellsignal erzeugt wird.

8. Schaltungsanordnung zur Durchführung des Verfahrens nach einem der vorhergehenden Ansprüche, mit einer Analyseeinrichtung zur Analyse des Impulssignals hinsichtlich seiner Amplitudenverzerrung und mit einer Bemessungseinrichtung für das dem Entzerrer zuzuführende Stellsignal, dadurch gekennzeichnet, daß die Analyseeinrichtung einen ersten Pegelregler (25) am Eingang des Entzerrers (23) und einen zweiten Pegelregler (27) am Ausgang (139) des Entzerrers (23) umfaßt, deren Reglersteuersignal jeweils bei Überschreiten eines Norm-Spannungspegels ($U_{Ref.}$) durch Impulse am Eingang des Entzerrers (23) bzw. durch Impulse am Ausgang (139) des Entzerrers (23) verändert wird, und daß die Bemessungseinrichtung eine Vergleichsschaltung (29) für die Reglersteuersignale des ersten und zweiten Pegelreglers (25, 27) und einen dieser nachgeschalteten Regler (31) enthält, dessen Ausgang mit dem Stelleingang (115) des Entzerrers (23) verbunden ist.

9. Schaltungsanordnung nach Anspruch 8, dadurch gekennzeichnet, daß die Vergleichsschaltung (29) ein konjunktives Verknüpfungsglied ist.

10. Schaltungsanordnung nach Anspruch 8 oder 9, dadurch gekennzeichnet, daß der Regler (31) ein integraler Regler ist.

11. Schaltungsanordnung nach Anspruch 10, dadurch gekennzeichnet, daß der integrale Regler (31) mindestens einen Kondensator (87, 89, 91) enthält, der mit seinem einen Anschluß auf Massepotential liegt und an seinem anderen Anschluß (97) mit einem ersten Ladepotential und über einen durch die Vergleichsschaltung (29) steuerbaren Schalter (111) mit einem zweiten Ladepotential (+5V) verbunden ist.

12. Schaltungsanordnung nach einem der Ansprüche 8 bis 11, dadurch gekennzeichnet, daß der erste Pegelregler (25) einen Komparator (69) zum Vergleich seines Ausgangssignals mit dem Norm-Spannungspegel ($U_{Ref.}$) enthält.

13. Schaltungsanordnung nach einem der Ansprüche 8 bis 12, dadurch gekennzeichnet, daß der erste Pegelregler (25) einen linearen Verstärker (63) mit fest eingestelltem Verstärkungsfaktor, einen einstellbaren Spannungsteiler (35) als Stellglied und eine integrale Regelschaltung (47) enthält, deren Ausgang (45) mit dem Stelleingang (41) des Stellgliedes (35) verbunden ist.

14. Schaltungsanordnung nach Anspruch 13, dadurch gekennzeichnet, daß der Spannungsteiler (35) des ersten Pegelreglers (25) einen Feldeffekttransistor (39) als regelbaren Widerstand aufweist, dessen Steuerelektrode (41) mit dem Ausgang (45) der integralen Regelschaltung (47) verbunden ist.

15. Schaltungsanordnung nach Anspruch 13 oder 14, dadurch gekennzeichnet, daß die integrale Regelschaltung (47) mindestens einen Kondensator (49, 51) enthält, der mit seinem einen Anschluß auf Massepotential liegt und an seinem anderen Anschluß (53) über einen Ladewiderstand (57) mit einem Ladepotential (+5V) und über einen durch den Komparator (69) steuerbaren Schalter (61) über einen Entladewiderstand (59) mit Massepotential verbunden ist.

16. Schaltungsanordnung nach Anspruch 15, dadurch gekennzeichnet, daß zwischen dem Komparatorausgang (71) und dem Schalter (61) ein konjunktives Verknüpfungsglied (75) vorgesehen ist, über das das Komparatorausgangssignal abschaltbar ist.

17. Schaltungsanordnung nach Anspruch 15 oder 16, dadurch gekennzeichnet, daß der Ladewiderstand (57) des Kondensators (49, 51) der integralen Regelschaltung (47) groß gegenüber ihrem Entladewiderstand (59) ist.

18. Schaltungsanordnung nach einem der Ansprüche 8 bis 17, dadurch gekennzeichnet, daß der zweite Pegelregler (27) mit dem ersten Pegelregler (25) baugleich ist.

## Revendications

1. Procédé pour engendrer un signal de réglage d'un égaliseur de signaux numériques émis par impulsions, déformés, avec des vitesses différentes de modifications des impulsions, en particulier pour signaux bipolaires, selon lequel une impulsion est analysée au point de vue de la déformation de son amplitude et le résultat de l'analyse commande la valeur de la grandeur de réglage, caractérisé en ce que la grandeur de réglage de l'égaliseur (23) est dimensionnée en fonction d'une comparaison des signaux de commande de réglage dérivés des amplitudes des impulsions individuelles à l'entrée de l'égaliseur (23) avec les signaux de commande de réglage dérivés des amplitudes des impulsions correspondantes à la sortie (139) de l'égaliseur (23) de telle façon que le degré d'égalisation de l'égaliseur (23) augmente jusqu'à ce que la différence d'amplitude des impulsions à l'entrée de l'égaliseur (23) et des impulsions correspondantes à la sortie (139) de l'égaliseur (23) corresponde à l'amortissement linéaire d'amplitude causé par l'égaliseur (23).

2. Procédé selon la revendication 1, caractérisé en ce que la comparaison des amplitudes des impulsions individuelles s'effectue par formation de la différence de leurs valeurs.

3. Procédé selon la revendication 1, caractérisé en ce que, pour la comparaison des amplitudes des impulsions individuelles à l'entrée de l'égaliseur (23) avec les amplitudes des impulsions correspondantes à la sortie (139) de l'égaliseur (23), il est déterminé si des impulsions correspondantes dépassent respectivement une valeur de consigne ($U_{Ref.}$) qui se trouve entre les amplitudes les plus grandes et les amplitudes les plus petites respectivement à l'entrée et à la sortie (139) de l'égaliseur (23) et la grandeur de réglage à transmettre à l'égaliseur (23) est dimensionnée dans le sens d'une augmentation du degré d'égalisation lorsque des impulsions respectives correspondantes dépassent aussi bien à l'entrée de l'égaliseur (23) qu'à la sortie de l'égaliseur (23) la valeur de consigne ($U_{Ref.}$) correspondante.

4. Procédé selon la revendication 3, caractérisé en ce que les valeurs de consigne ($U_{Ref.}$) sont fixées indépendamment l'une de l'autre.

5. Procédé selon la revendication 3, caractérisé en ce que les impulsions à l'entrée de l'égaliseur (23) et les impulsions à la sortie (139) de l'égaliseur (23) sont amplifiées chacune de façon linéaire de telle sorte que leurs amplitudes les plus grandes dépassent juste la valeur de consigne respective ($U_{Ref.}$) fixée.

6. Procédé selon la revendication 5, caractérisé en ce que la valeur de consigne ($U_{Ref.}$) pour les impulsions à l'entrée de l'égaliseur (23) correspond à la valeur de consigne ($U_{Ref.}$) pour les impulsions à la sortie (139) de l'égaliseur (23).

7. Procédé selon une quelconque des revendications précédentes, caractérisé en ce qu'avec le résultat de la comparaison est commandée une opération de régulation intégrale par laquelle est engendré le signal de réglage.

8. Circuit pour la mise en oeuvre du procédé selon une quelconque des revendications précédentes, avec un dispositif d'analyse pour l'analyse, au point de vue de sa déformation de l'amplitude, de signaux émis par impulsions et avec un dispositif de dimensionnement pour le signal de réglage à transmettre à l'égaliseur, caractérisé en ce que le dispositif d'analyse comprend un premier régulateur de niveau (25) à l'entrée de l'égaliseur (23) et un deuxième régulateur de niveau (27) à la sortie (139) de l'égaliseur (23) dont le signal de commande de régulation est modifié en cas de dépassement d'un niveau de tension normal ($U_{Ref.}$) respectivement par des impulsions à l'entrée de l'égaliseur (23) et par des impulsions à la sortie de l'égaliseur (23), et le dispositif de dimensionnement contient un circuit de comparaison (29) pour les signaux de commande du régulateur du premier (25) et du deuxième (27) régulateur de niveau et un régulateur (31) disposé en aval de ce même circuit de comparaison dont la sortie est reliée à l'entrée de commande (115) de l'égaliseur (23).

9. Circuit selon la revendication 8, caractérisé en ce que le circuit de comparaison (29) est un élément de logique conjonctif.

10. Circuit selon la revendication 8 ou 9, caractérisé en ce que le régulateur (31) est un régulateur intégral.

11. Circuit selon la revendication 10, caractérisé en ce que le régulateur intégral (31) comprend au moins un condensateur (87, 89, 91) qui est mis au potentiel de la masse à l'une de ses bornes et, à son autre borne (97), il est relié à un premier potentiel de charge et à un deuxième potentiel de charge (+ 5V) par l'intermédiaire d'un commutateur (111) pouvant être commandé par le circuit de comparaison (29).

12. Circuit selon une quelconque des revendications 8 à 11, caractérisé en ce que le premier régulateur de niveau (25) comprend un comparateur (69) pour la comparaison de son signal de sortie avec le niveau de tension normal ($U_{Ref.}$).

13. Circuit selon une quelconque des revendications 8 à 12, caractérisé en ce que le premier régulateur de niveau (25) comprend un amplificateur linéaire (63) à facteur d'amplification réglé à une valeur fixe, un diviseur de tension (35) réglable comme organe de réglage et un circuit de régulation intégrale (47) dont la sortie (45) est reliée à l'entrée de commande (41) de l'organe de réglage (35).

14. Circuit selon la revendication 13, caractérisé en ce que le diviseur de tension (35) du premier régulateur de niveau (25) contient comme résistance réglable un transistor à effet de champ (39) dont l'électrode de commande (41) est reliée à la sortie (45) du circuit de régulation intégrale (47).

15. Circuit selon la revendication 13 ou 14, caractérisé en ce que le circuit de régulation intégrale (47) comprend au moins un condensateur (49, 51) qui est au potentiel de la masse à l'une de ses bornes et, à son autre borne (53), est relié par l'intermédiaire d'une résistance de charge (57) à un potentiel de charge (+5 V) et, au moyen d'un interrupteur (61) pouvant être commandé par le comparateur (69), est mis au potentiel de la masse par l'intermédiaire d'une résistance de décharge (59).

16. Circuit selon la revendication 15, caractérisé en ce qu'il est prévu entre la sortie du comparateur (71) et l'interrupteur (61) un élément de logique (75) conjonctif au moyen duquel le signal de sortie du comparateur peut être interrompu.

17. Circuit selon la revendication 15 ou 16, caractérisé en ce que la résistance de charge (57) du condensateur (49, 51) du circuit de régulation intégrale (47) est grande par rapport à sa résistance de décharge (59).

18. Circuit selon une quelconque des revendications 8 à 17, caractérisé en ce que le deuxième régulateur de niveau (27) est de construction identique à celle du premier régulateur de niveau (25).

**Claims**

1. A method of producing a control signal for an equalizer for distorted digital impulse signals of different pulse recurrence rates, more particularly for bipolar signals, an impulse signal being analyzed for amplitude distortion and the analysis result controlling the dimensioning of the regulated quantity, characterised in that the regulated quantity for the equalizer (23) is so dimensioned, in dependence upon a comparison between, on the one hand, the control signals derived from the amplitudes of the discrete pulses at the equalizer input and, on the other hand, the control signals derived from the amplitudes of the corresponding pulses at the equalizer output (139), that the equalization provided by the equalizer (23) continues to rise until the difference between the amplitudes of the equalizer input pulses and the corresponding pulses at the equalizer output (139) corresponds to the linear amplitude damping produced by the equalizer (23).

2. A method according to claim 1, characterised in that the amplitudes of the discrete pulses are compared by forming the difference between their values.

3. A method according to claim 1, characterised in that to compare the amplitudes of the discrete pulses at the equalizer input with the amplitudes of the corresponding pulses at the equalizer output (139), a determination is made whether corresponding pulses exceed a set value ($U_{Ref.}$) between the maximum and minimum amplitudes of the pulses at the equalizer input and output (139) respectively; and the regulated quantity to be supplied to the equalizer (23) is dimensioned in the sense of an increase of equalization when corresponding pulses exceed the particular set value ($U_{Ref.}$) concerned at both the input and output of the equalizer (23).

4. A method according to claim 3, characterised in that the set values ($U_{Ref.}$) are adjusted independently of one another.

5. A method according to claim 3, characterised in that the equalizer input pulses and the equalizer output pulses are so amplified linearly that their maximum amplitudes just exceed the respective fixed set value ($U_{Ref.}$).

6. A method according to claim 5, characterised in that the set value ($U_{Ref.}$) for the equalizer input pulses coincides with the set value ($U_{Ref.}$) for the equalizer output pulses.

7. A method according to any of the previous claims, characterised in that an integral control operation which produces the control signal is activated by the comparison result.

8. A circuit arrangement for performing the method according to any of the previous claims and comprising an analyzer for analyzing the pulse signal in connection with amplitude equalization thereof and comprising means for dimensioning the control signal to be supplied to the equalizer, characterised in that the analyzer comprises a first level controller (25) at the equalizer input and a second level controller (27) at the equalizer output (139), the controller control signal of the latter controllers being varied by equalizer input pulses and equalizer output pulses respectively in the event of a reference voltage level ($U_{Ref.}$) being exceeded, and the dimensioning means comprise a comparator (29) for the controller control signals of the first and second level controller (25, 27) and a controller (31) which is disposed after the comparator and whose output is connected to the setting input (115) of the equalizer (23).

9. A circuit arrangement according to claim 8, characterised in that the comparator (29) is an AND element.

10. A circuit arrangement according to claim 8 or 9, characterised in that the controller (31) is an integral controller.

11. A circuit arrangement according to claim 10, characterised in that the integral controller (31) comprises at least one capacitor (87, 89, 91) having one connection at earth potential and its other connection (97) at a first charging potential and, by way of a switch (111) controllable by the comparator (29), at a second charging potential (+ 5 V).

12. A circuit arrangement according to any of claims 8—11, characterised in that the first level controller (25) comprises a comparator (69) for comparing its output signal with the set-value voltage level (U_{Ref}).

13. A circuit arrangement according to any of claims 8—12, characterised in that the first level controller (25) comprises a linear amplifier (63) having a fixed amplification factor, an adjustable voltage divider (35) as regulating element and an integral control circuit (47) whose output (45) is connected to the setting input (41) of the regulating element (35).

14. A circuit arrangement according to claim 13, characterised in that the voltage divider (35) of the first level controller (25) has a field effect transistor (39) as adjustable resistance, the control electrode (41) of such transistor being connected to the output (45) of the integral control circuit (47).

15. A circuit arrangement according to claim 13 or 14, characterised in that the integral control circuit arrangement (47) comprises at least one capacitor (49, 51) having one connection at earth potential and its other connection (53) connected by way of a charging resistance (57) to a charging potential (+ 5 V) and, by way of a switch (61) controllable by the comparator (69) and by way of a discharge resistance (59), at earth potential.

16. A circuit arrangement according to claim 15, characterised in an AND element (75) via which the comparator output signal can be switched off is disposed between the comparator output (71) and the switch (61).

17. A circuit arrangement according to claim 15 or 16, characterised in that the charging resistance (57) of the capacitor (49, 51) of the integral control circuit (47) is large as compared with its discharge resistance (59).

18. A circuit arrangement according to any of claims 8—17, characterised in that the second level controller (27) is of identical construction to the first level controller (25).

Fig. 1

Fig. 2

EP 0 196 549 B1

1 0 1 1 0 1 0 1 1 1 1 0 1 0 1 1 1 0 1 0

+A---

FIG. 3a

-A---

FIG. 3b

FIG. 3c

U_ref.

FIG. 3d

FIG. 3e

FIG. 3f

FIG. 3g

FIG. 3h

3